(19) **Europäisches Patentamt**
**European Patent Office**
**Office européen des brevets**

(11) Veröffentlichungsnummer: **0 424 813 A1**

# (12) EUROPÄISCHE PATENTANMELDUNG

(21) Anmeldenummer: 90120045.1

(51) Int. Cl.⁵: **H01M 8/12, H01M 8/24**

(22) Anmeldetag: **19.10.90**

(30) Priorität: 24.10.89 DE 3935311

(43) Veröffentlichungstag der Anmeldung:
**02.05.91 Patentblatt 91/18**

(84) Benannte Vertragsstaaten:
**CH DE FR GB IT LI SE**

(71) Anmelder: **Asea Brown Boveri
Aktiengesellschaft
Kallstadter Strasse 1**
**W-6800 Mannheim 31(DE)**

(72) Erfinder: **Singheiser, Lorenz, Dr.
Schwarzwaldstrasse 66/1
W-6900 Heidelberg(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) **Brennstoffzellenanordnung.**

(57) Die Erfindung bezieht sich auf eine Brennstoffzellenanordnung (10), die aus zwei oder mehreren Brennstoffzellen (1) zusammengesetzt ist. Jede dieser Brennstoffzellen (1) wird durch eine Anode(2), eine Kathode(3) sowie einen sauerstoffionenleitenden Festelektrolyten (4) gebildet. Erfindungsgemß ist die Anode(2) und /oder die Kathode(4) aus einer intermetallischen Verbindung gefertigt.

# Fig.2

## BRENNSTOFFZELLENANORDNUNG

Die Erfindung bezieht sich auf eine Brennstoffzellenanordnung mit wenigstens einer Brennstoffzelle gemäß dem Oberbegriff des Patentanspruches 1.

Eine solche Brennstoffzellenanordnung kann beispielsweise als Stromquelle genutzt werden. Aus der Informationsschrift "High temperature Fuel Cells, Solid Electrolyts 1978, F.J. Rohr, ist eine keramische Brennstoffzelle mit einem sauerstoffionenleitenden Festelektrolyten sowie einer Anode und einer Kathode bekannt. Diese Einrichtung ermöglicht es, bei Temperaturen von mehr als 800 °C die chemische Energie eines Brennstoffs, z.B. von Kohle, Erdöl, Erdgas oder Wasserstoff durch elektrochemische Oxidation mit Sauerstoff direkt in elektrische Energie umzuwandeln. Die Energieumwandlung erfolgt mit einem Wirkungsgrad, der größer als 50% ist. Es sind Brennstoffzellenanordnungen bekannt, die durch das Zusammenfassen und in Reiheschalten von mehreren einzelnen Brennstoffzellen gebildet werden. Diese Anordnungen sind für den dauerhaften Betrieb wenig geeignet, da sie bei sehr hohen Temperaturen arbeiten, so daß hiermit hohe Leistungsverluste verbunden sind. Die elektrische Leitfähigkeit der Elektroden dieser Brennstoffzellen entspricht nicht den gewünschten Anforderungen, so daß die angestrebten Leistungsdichten nicht erzielt werden können.

Aufgabe der Erfindung ist es, eine Brennstoffzelle zu schaffen, die bei niedrigerer Temperatur betrieben werden kann, und die eine höhere elektrische Leitfähigkeit des Elektrodenmaterials aufweist als bekannte Einrichtungen, und die zudem mit weiteren Brennstoffzellen zu einer Brennstoffzellenanordnung verschaltbar ist.

Diese Aufgabe wird erfindungsgemäß durch die Merkmale des Patentanspruches 1 gelöst.

Erfindungsgemäß werden die Elektroden einer jeden Brennstoffzelle aus einer intermetallischen Verbindung hergestellt, wobei eine der Elektroden als tragendes Element ausgebildet werden kann. Hierdurch wird die Elektronenleitfähigkeit der Elektroden verbessert. Zudem können die Elektroden dünner ausgebildet werden, da die Spannungsverluste bei Elektroden aus diesem Material geringer sind, als bei den herkömmlichen Elektroden, die aus Perowskiten bzw. aus Nickel/$ZrO_2$-Cermets gefertigt sind. Die Betriebstemperatur dieser erfindungsgemäßen Brennstoffzelle liegt niedriger als bei herkömmlichen Zellen, da die elektrische Leitfähigkeit dieser Brennstoffzelle bereits bei niedrigeren Temperaturen höher ist als bei vergleichbaren Brennstoffzellen, wenn diese mit der gleichen Temperatur betrieben werden. Um die negativen Einflüsse von sich bildenden nichtleitenden oxidischen Schichten in Form von Alumniumoxid oder Siliziumoxid in oder auf den Elektroden zu vermeiden, wird dem Elektrodenmaterial eine definierte Menge an Edelmetall zugesetzt. Die Mengen können 2 bis 70Gew% betragen. Geeignet hierfür sind Platin, Silber oder Paladium und ähnliche Metalle. Hierdurch wird die elektrische Leitfähigkeit der sich selbst ausbildenden Oxidschichten gewährleistet. Anstelle des Einbettens von Edelmetall besteht auch die Möglichkeit, die Elektroden im oberflächennahen Bereich mit Edelmetall anzureichern. Dies kann beispielsweise dadurch geschehen, daß auf den Oberflächen der Elektroden eine Abscheidung von Edelmetall mit anschließender Diffusionsglühung durchgeführt wird. Das Aufbringen einer dünnen Schicht, bestehend aus einem Gemisch der intermetallischen Verbindung und dem Edelmetall auf den Oberflächen der Elektroden ist ebenfalls möglich. Erfindungsgemäß besteht die Möglichkeit, die elektrisch leitenden Schichten, welche zur Reihenschaltung von mehreren Brennstoffzellen zu einer Brennstoffzellenanordnung verwendet werden, ebenfalls aus solchen intermetallischen Verbindungen herzustellen. Weitere erfindungswesentliche Merkmale sind in den Unteransprüchen gekennzeichnet.

Die erfindungsgemäße Brennstoffzellenanordnung wird nachfolgend anhand von schematischen Zeichnungen näher erläutert. Es zeigen:

Fig. 1 eine erfindungsgegemäße Brennstoffzelle,
Fig. 2 eine Variante der in Fig. 1 dargestellten Brennstoffzelle,
Fig. 3 eine weitere Ausführungsform der erfindungsgemäßen Brennstoffzelle,
Fig. 4 die Reihenschaltung von zwei Brennstoffzellen zu einer Brennstoffzellenanordnung.

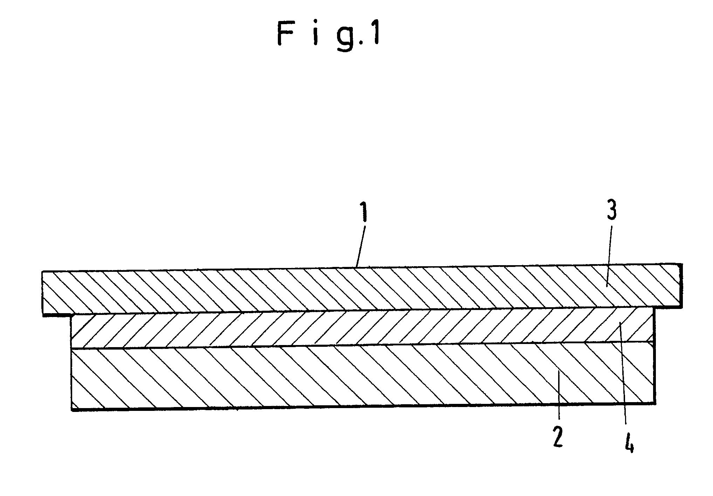

Die in Fig. 1 dargestellte Brennstoffzelle 1 wird im wesentlichen durch eine Anode 2, eine Kathode 3 und einen Festelektrolyten 4 gebildet. Die Erfindung ist nicht an die Form der Brennstoffzelle 1 gebunden. Diese kann flächig oder als Zylinder ausgebildet sein bzw. eine andere geometrische Form aufweisen. Bei dem hier dargestellten Ausführungsbeispiel ist die Anode 2 aus Nickelzirkoniumdioxid Ni/$CrO_2$- bzw. Nickeloxid/Zirkoniumdioxid Cermet NiO/$ZrO_2$-Cermet mit oder ohne Zusatz an stabilisiertem Zirkoniumdioxid gefertigt. Die Anode 2 ist porös und damit gasdurchlässig. An ihrer Oberfläche 2 wird der in Gasform vorliegende Brennstoff (hier nicht dargestellt) geleitet. Die Anode weist vorzugsweise eine Dicke von 100 bis 300 $\mu$m auf. Der Festelektrolyt 4, der ebenfalls wie die Anode 2 als flächiges Elelement ausgebildet ist, ist zwischen der Anode und der Kathode 3 angeordnet. Seine Dicke beträgt 20 bis 100 $\mu$m. Er ist aus

einem gasdichten Material gefertigt. Erfindungsgemäß wird hierfür $(ZrO_2)_{0,9}$ $(Y_2O_3)_{0,1}$ verwendet. Die Kathode 3, die unmittelbar auf den Festelektrolyten 4 aufgetragen ist, wird durch eine Schicht mit einer Dicke von 100 bis 2000 $\mu$m gebildet. Sie ist aus einer intermetallischen Verbindung in Form eines Silizids, eines Disilizids oder eines Aluminids gefertigt. Für die Ausbildung der Elektrode geeignete Silizide sind TiSi, $Ti_5Si_3$ und ähnlich aufgebaute Silizide oder Aluminide. Als Disilizide kommen für die Ausbildung der Elektrode 3 $MoSi_2$, $TiSi_2$, $NbSi_2$, $WSi_2$, $TaSi_2$ und beliebige andere Disilizide in Frage. Aluminide, die für die Ausbildung der Elektrode verwendet werden können, sind beispielsweise CoAl, NiAl, TiAl. Da sich in der als Kathode dienenden Schicht 3 nichtleitende Oxide ausbilden können, werden der Schicht 3 zusätzlich 2 bis 70 Gew% eines Edelmetalls zugesetzt. Hierfür kommen Platin, Silber oder Paladium und andere Edelmetalle in Frage. Bei der Ausbildung von nichtleitenden Oxidschichten innerhalb der Schicht 3 werden diese Metallteilchen in diese Oxidschichten eingebettet, wodurch die elektrische Leitfähigkeit dieser Oxidschichten gewährleistet wird. Erfindungsgemäß besteht die Möglichkeit, die Anode 2 in gleicher Weise ausbilden, wie die Kathode 3. Die Leitfähigkeit der Anode 2 wird dann ebenfalls verbessert. Falls es die Gegebenheiten erfordern, kann auch nur die Anode 2 aus einer intermetallischen Verbindung mit einer der obengenannten Zusammensetzungen hergestellt werden, während die Kathode beispielsweise durch einen üblicherweise verwendeten Perowskit gefertigt wird.

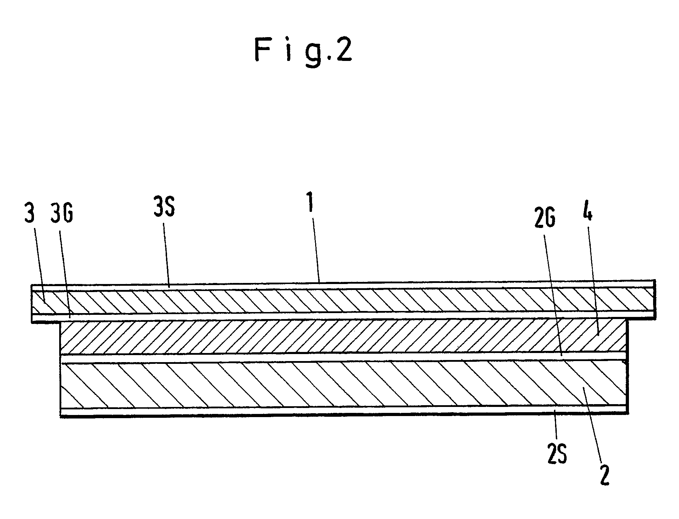

In Fig. 2 ist eine Variante der in Fig. 1 dargestellten Brennstoffzelle dargestellt. Die Anode 2, die Kathode 3 und der Festelektrolyt 4 sind hierbei wiederum flächig ausgebildet. Der Festelektrolyt 4 ist aus dem gleichen Material gefertigt, wie der in Fig. 1 dargestellte und in der zugehörigen Beschreibung erläuterte Festelektrolyt. Die Anode 2 kann aus einer intermetallischen Verbindung hergestellt sein oder aus dem oben beschriebenen Cermet. Auch die Kathode 3 kann aus einer intermetallischen Verbindung gefertigt sein. Falls es die Gegebenheiten erfordern, kann die Kathode 3 auch aus einem Perowskit gefertigt werden. Bei dem hier dargestellten Ausführungsbeispiel sind bie beiden Elektroden 2 und 3 jeweils aus einer intermetallischen Verbindung hergestellt. Um die Leitfähigkeit der Anode 2 und der Kathode 3 optimal groß zu halten, und die Nichtleitfähigkeit der sich ausbildenden Oxidschichten innerhalb der intermetallischen Verbindungen zu überbrücken, ist im Oberflächenbereich 2S der Anode 2 und in der Grenzschicht 2G der Anode 2 zum Festelektrolyten 4 hin eine Edelmetallschicht ausgebildet. In gleicher Weise ist die Kathode 3 in ihrem oberflächennahen Grenzbereich mit einer Schicht 3S und in ihrem Grenzbereich zum Festelektrolyten 4 hin mit einer Schicht 3G aus Edelmetall versehen. Diese Edelmetallschicht wird aus Platin, Silber oder Paladium gebildet, und durch Abscheidung des Edelmetalls mit anschließender Diffusionsglühung auf der Kathode bzw. auf der Anode ausgebildet. Erfindungsgemäß können die Anode 2 und die Kathode 3 in diesen Grenzbereichen auch mit jeweils einer dünnen Schicht, bestehend aus einem Gemisch, das durch eine intermetallische Verbindung der obengenannten Art und einem Edelmetall hergestellt wird, überzogen werden. Die Beschichtung kann mit einem der bekannten Beschichtungsverfahren durchgeführt werden.

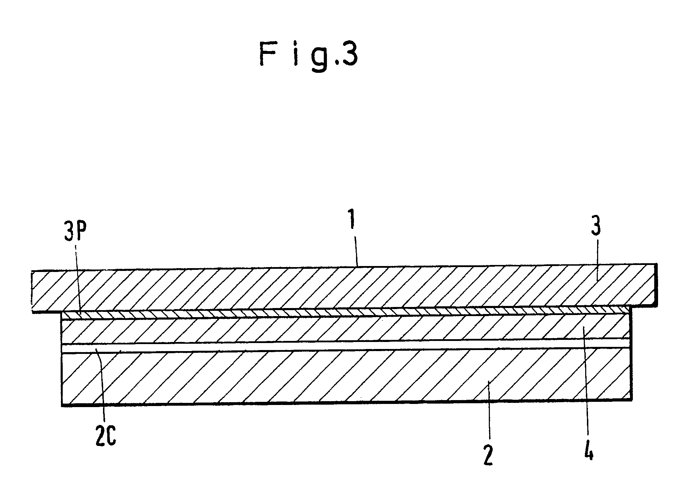

In Fig. 3 ist eine weitere Brennstoffzelle dargestellt, die durch eine flächige Anode 2, eine flächige Kathode 3 und einen flächigen Festelektrolyten 4 gebildet wird. Im Unterschied zu den vorangegangenen Ausführungsbeispielen ist zwischen der Anode 2 und dem Festelektrolyten 4 eine zusätzliche poröse Schicht 2C angeordnet. Zwischen der Kathode 3 und dem Festelektrolyten 4 ist ebenfalls eine poröse Schicht 3P angeordnet. Die Schicht 2C ist 0,5- bis 5 $\mu$m dick ausgebildet. Sie hat katalytische Eigenschaften und ist aus $ZrO_2$/Ni gefertigt. Die Schicht 3P hat die Aufgabe, die Geschwindigkeit der Phasengrenzreaktionen zu erhöhen. Sie weist eine Dicke von 0,5 bis -5 $\mu$m auf. Für ihre Herstellung wird ein Perowskit benutzt. Für das Auftragen der Schichten 2C und 3P können alle bekannten Beschichtungsverfahren angewendet werden. Erfindungsgemäß ist es möglich, nur eine der Elektroden aus einer intermetallischen Verbindung zu fertigen, und die zweite Elektrode aus einem Cermet oder einem Perow skit zu fertigen. Zur Erzielung der Leitfähigkeit von Oxiden, die sich in oder auf den aus Elektroden 2 und 3 bilden, enthalten die Elektroden 2 und 3 wiederum Zusätze in Form von 2 bis 70 Gew.% Edelmetall bezogen auf das Gesamtgewicht des Elektrodenmaterials. Erfindungsgemäß besteht die Möglichkeit, die aus einer intermetallischen Verbindung gefertigten Elektroden 2 und 3 in ihren Grenzbereichen ebenfalls mit einer metallischen Schicht 2S bzw. 2G und 3S und 2G zu versehen. Selbstverständlich besteht auch hier die Möglichkeit, eine Schicht, bestehend aus einer intermetallischen Verbindung und einem Edelmetallzusatz auf die Elektroden 2 und 3 aufzutragen bzw. die Elektroden in ihren Grenzbereichen mit einer solchen Schicht zu versehen.

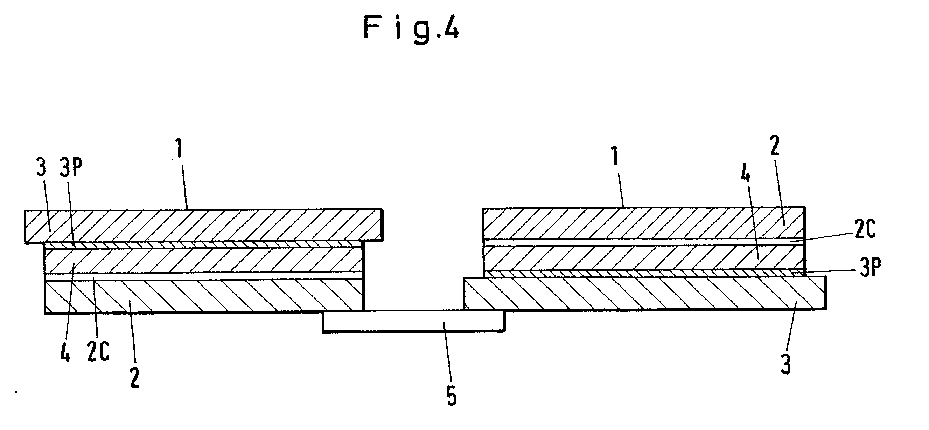

In Fig. 4 sind zwei Brennstoffzellen 1 in Reihe geschaltet. Die beiden Brennstoffzellen 1 sind so ausgebildet, wie die in Fig. 3 dargestellte und in der zugehörigen Beschreibung erläuterte Brennstoffzelle 1. Für die elektrisch leitenden Verbindung der Brennstoffzellen 1 zu einer Brennstoffzellenanordnung 10 wird eine elektrisch leitenden Schicht 5 verwendet, die ebenso wie die Elektroden 2 und 3 der Brennstoffzellen 1 aus einer intermetallischen Verbindung hergestellt ist. Die elektrisch leitende Schicht 5 kann entweder mit einem Zusatz an Edelmetall versehen werden. Andererseits besteht die Möglichkeit, die elektrisch leitende Schicht 5 in ihren Grenzbereichen mit einer Edelmetallschicht zu versehen. Ebenso ist es möglich, die elektrisch leitende Schicht 5 in den äußeren Grenzbereichen mit einer dünnen Schicht aus einer intermetallischen Verbindung zu überziehen, wobei der intermetallischen Verbindung Edelmetall in einer Menge von 2 bis 70 Gew% beigemischt ist. Die intermetallische Verbindung kann sowohl für elektrisch leitende Verbindungen auf der Anodenseite als auch auf der Kathodenseite sowie für Serienschaltungen verwendet werden.

**Ansprüche**

1. Brennstoffzellenanordnung mit wenigstens einer Brennstoffzelle (1), die wenigstens eine poröse Anode (2) und eine poröse Kathode (3) aufweist, welche durch einen gasdichten sauerstoffionenleitenden Festelektrolyten (4) voneinander getrennt sind, dadurch gekennzeichnet , daß die Anode (2) und/oder die Kathode (3) aus einer intermetallischen Verbindung gefertigt sind.

2. Brennstoffzellenanordnung nach Anspruch 1, dadurch gekennzeichnet, daß die Anode (2) und/oder die Kathode (3) aus einem Silizid, einem Dizilizid oder einem Aluminid gefertigt sind und eine Dicke von 5 $\mu$m -bis 5 mm aufweisen.

3. Brennstoffzellenanordnung nach einem der Ansprüche 1 oder 2, dadurch gekennzeichnet, daß die Anode (2) und/oder die Kathode (3) aus TiSi, Ti$_5$Si$_3$ oder Siliziden anderer Elemente des chemischen Periodensystems mit vergleichbarer Stöchiometrie gefertigt sind.

4. Brennstoffzellenanordnung nach einem der Ansprüche 1 oder 2, dadurch gekennzeichnet, daß die Anode (2) und/oder die Kathode (3) aus MoSi$_2$, TiSi$_2$, NbSi$_2$, WSi$_2$ oder TaSi$_2$ oder Disiliziden anderer Elemente des Periodensystems gefertigt sind.

5. Brennstoffzellenanordnung nach einem der Ansprüche 1 oder 2, dadurch gekennzeichnet, daß die Anode (2) und/oder die Kathode (3) aus CoAl, NiAl oder TiAl oder Aluminiden anderer Elemente des Periodensystems gefertigt sind.

6. Brennstoffzellenanordnung nach einen der Ansprüche 1 bis 5, dadurch gekennzeichnet, daß die Anode (2) und die Kathode (3) in ihren äußeren Grenzbereichen und in den Grenzbereichen zum Festelektrolyten (4) hin mit jeweils einer porösen Metallschicht (2G,2S, 3G und 3S) versehen sind, die eine Dicke von 1 bis 10 $\mu$m aufweisen.

7. Brennstoffzellenanordnung nach einem der Ansprüche 1 bis 6, dadurch gekennzeichnet, daß zwischen der Anode (2) und dem Festelelektrolyten (4) eine poröse Cermetschicht (2C) mit einer Dicke von 0,5 bis 5 $\mu$m angeordnet ist, und daß zwischen der Kathode (3) und dem Festelektrolyten (4) eine poröse Perowskitschicht (3P) mit einer Dicke von 0,5 bis 5 $\mu$m vorgesehen ist.

8. Brennstoffzellenanordnung nach einem der Ansprüche 1 bis 7, dadurch gekennzeichnet, daß der intermetallischen Verbindung 2 bis 70Gew% eines Edelmetalls in Form von Platin, Silber oder Paladium beigemischt sind.

9. Brennstoffzellenanordnung nach einem der Ansprüche 1 bis 8, dadurch gekennzeichnet, daß zwei Brennstoffzellen (1) über eine elektrisch leitende Schicht (5) in Reihe geschaltet sind, und daß die elektrisch leitende Schicht (5) aus einer intermetallischen Verbindung gefertigt ist.

10. Brennstoffzellenanordnung nach einem der Ansprüche 1 bis 9, dadurch gekennzeichnet, daß eine der Elektroden (2,3) aus einer intermetallischen Verbindung als poröses, tragendes Bauelement ausgebildet ist und gleichzeitig die Funktion der Anode (2) oder Kathode (3) ausübt.

# F i g.1

5

# F i g.2

# Fig.3

Fig.4

**Europäisches
Patentamt**

# EUROPÄISCHER
# RECHERCHENBERICHT

Nummer der Anmeldung

# EP 90 12 0045

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 464 861 (K.R. WIILIAMS et al.) * Patentansprüche 1,5,7; Spalte 2, Zeilen 8-34; Spalte 3, Zeilen 6-30 * — — — | 1,2,5,6 | H 01 M 8/12 H 01 M 8/24 |
| X | FR-A-2 067 181 (CO. GENERALE D'ELECTRICITE) * Patentanspruch 4 * — — — | 1,5 | |
| A | DE-A-3 112 739 (R. BOSCH) * Patentanspruch; Seite 5, Zeilen 23-29 * — — — | 4,8 | |
| A | CH-A-5 156 22 (CO. FRANCAISE DE RAFFINAGE) * Spalte 4, Zeilen 45-62; Spalte 5, Zeilen 58-62 * — — — | 1 | |
| A | PATENT ABSTRACTS OF JAPAN, Band 13 (E-845)[507], 14. November 1989; & JP-A-01 204 365 (FUJI ELECTRIC CO.) 16-08-1989 * Zusammenfassung * — — — | 1,5 | |
| A | METALLURGICAL TRANSACTIONS A, Band 8A, Nr. 3, März 1977, Seiten 503-510; P.J. MESCHTER et al.: "An investigation of high temperature thermodynamic properties in the Pt-Zr and Pt-Hf systems" * Seite 509, linke Spalte, Zeilen 8-16; Seite 503, linke Spalte, Zeilen 17-19 * — — — — — | | RECHERCHIERTE SACHGEBIETE (Int. Cl.5) H 01 M |

Der vorliegende Recherchenbericht wurde für alle Patentansprüche erstellt

| Recherchenort | Abschlußdatum der Recherche | Prüfer |
|---|---|---|
| Den Haag | 30 Januar 91 | D'HONDT J.W. |